(19) Europäisches Patentamt
European Patent Office
Office européen des brevets

(11) **EP 2 207 287 B1**

(12) **EUROPEAN PATENT SPECIFICATION**

(45) Date of publication and mention
of the grant of the patent:
**05.09.2012 Bulletin 2012/36**

(51) Int Cl.:
***H04J 3/16*** *(2006.01)* ***H04L 1/00*** *(2006.01)*

(21) Application number: **09305021.9**

(22) Date of filing: **09.01.2009**

(54) **Reception of ethernet packets transported over a synchronous transport network**

Empfang von über ein synchrones Transportnetzwerk empfangenen Ethernetpaketen

Réception de paquets Ethernet transportés dans un réseau de transport synchrone

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**14.07.2010 Bulletin 2010/28**

(73) Proprietor: **Alcatel Lucent**
**75007 Paris (FR)**

(72) Inventors:
• **Modena, Marco**
**23888, ROVAGNATE (IT)**

• **Constantini, Carlo**
**22064, CASATENOVO (IT)**
• **Bobbo, Gianluca**
**20052, MONZA (IT)**

(74) Representative: **Wetzel, Emmanuelle et al**
**Alcatel Lucent**
**Intellectual Property & Standards**
**70430 Stuttgart (DE)**

(56) References cited:
**EP-A1- 1 628 402        WO-A1-2004/073222**
**US-A1- 2007 127 487**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to the field of synchronous transport networks transporting packets. In particular, the present invention relates to a method for receiving Ethernet packets transported over a synchronous transport network (such as, for instance, an SDH network or a Sonet network). Besides, the present invention relates to an Ethernet endpoint suitable for receiving Ethernet packets from a synchronous transport network, and to a communication system comprising a synchronous transport network and such an Ethernet endpoint.

**Background Art**

As it is known, in a packet-switched network traffic is transmitted in the form of packets. Examples of packet-switched networks are Ethernet networks, IP (Internet Protocol) networks and MPLS (Multi-Protocol Label Switching) networks.

A packet typically comprises a header with information allowing routing the packet from source to destination and a payload with data to be transmitted. For instance, the IEEE Standard 803.2, Part 3, 9 December 2005, Chapter 3, discloses that an Ethernet packet comprises a header of 22 bytes, a payload with a length ranging from 46 to 1500 bytes and a frame check sequence of 4 bytes. When an Ethernet packet is received at the destination, the frame check sequence is processed for checking whether the header or payload comprises one or more bit errors. In the affirmative, the Ethernet packet is discarded.

Packets may be transmitted over a synchronous transport network, such as for instance SDH (Synchronous Digital Hierarchy), Sonet (Synchronous Optical NETwork) or OTN (Optical Transport Network).

For instance, a synchronous transport network may support an Ethernet Private Line (EPL) service, namely a point-to-point interconnection between a first and a second Ethernet endpoints placed at the boundaries of an SDH network, by transporting Ethernet packets from the first Ethernet endpoint to the second Ethernet endpoint, and *vice versa.*

Before transmission over the synchronous transport network, packets are typically encapsulated into synchronous frames, which are then mapped into synchronous tributaries supported by the synchronous transport network. On the other hand, after reception from the synchronous transport network, the synchronous frames are extracted from the synchronous tributaries, and then packets are de-encapsulated from the synchronous frames.

For instance, in case of transport of Ethernet packets from a first Ethernet endpoint to a second Ethernet endpoint over an SDH network, at the first Ethernet endpoint Ethernet packets typically undergo an encapsulation process which is termed GFP (General Framing Procedure). GFP is defined by the International Telecommunication Union (ITU) in the Recommendation ITU-T G.7041/Y.1303 (12/2003). In particular, Chapter 6 of such Recommendation discloses that GFP provides encapsulating Ethernet packets into GFP frames. Each GFP frame typically includes a GFP header and a GFP payload, in turn comprising the Ethernet packet to be transmitted. The GFP frames are then mapped in SDH VC-n tributaries, which are in turn transmitted over the SDH network. Upon reception at the second Ethernet endpoint, GFP frames are extracted from the SDH VC-n tributaries, and the Ethernet packets are de-encapsulated from the GFP frames. As mentioned above, the frame check sequences of the Ethernet packets are then checked, and Ethernet packets with bit errors are discarded.

US 2007/0127487 A1 discloses a method for managing a service bandwidth by a customer port and an EPON system using the same. In order to manage the service bandwidth by a customer, ONU and ONT allocate a service class according to a combination of information about a customer that receives a service, and a service type and a service priority of a service provided to a customer, allocate a bandwidth according to each service class and control a uplink bandwidth or a downlink bandwidth according to a service class. Also, a system manager collects information about a service provider, a service provides from a service provider, a customer that receives a service, and information for classifying a service, After collecting, the system manager provides the collected information to the ONU and the OLT.

EP 1 628 402 A1 discloses that 64/66b encoding (IEEE 802.3ae Standard for 10Gigabit Ethernet) is based on a self-synchronous scrambler which inherently duplicates errors occurring in the transmission line. An error carryover indicator ECI vector is used to correct duplicated errors crossing the codeword boundary and entering into the next codeword. The ECI vector is updated for each codeword $C(i)$ to provide the position of the erroneous bit(s) carried over to the next codeword $C(i+1)$. The codeword $C(i+1)$ is corrected by XOR-ing it with the ECI vector.

**Summary of the Invention**

The Applicant has noticed that the above solution of receiving Ethernet packets transported over a synchronous transport network has some drawbacks.

Indeed, a synchronous transport network typically has a bit error rate ranging from $10^{-12}$ (in case of optimum transmission conditions) to $10^{-6}$ (in case of degraded transmission conditions). When transporting circuit-switched traffic (such as e.g. traffic associated to voice calls), this range of bit error rates gives rise to an acceptable quality of service. However, when the synchronous transport network transports Ethernet packets, due to packets discarding a bit error rate of $10^{-6}$ may induce a very high rate of discarded packets, depending on the length of the packets and, more specifically, of their payload. For instance, in case of standard Ethernet packets, the Ethernet payload length ranges from 46 to 1500 bytes. In this case, the rate of discarded packets may be up to 1%. In case of jumbo Ethernet packets, the Ethernet payload length is higher than 1500 bytes. In this case, the rate of discarded packets may be up to 10%.

These rates of discarded packets are disadvantageously unacceptable, since they induce an unacceptable degradation of the quality of service, in particular when associated to very high latencies introduced by encapsulation in GFP frames, mapping in SDH VC-n tributaries and transmission over the SDH network.

Possible solutions may be implementing mechanisms for retransmission of the discarded Ethernet packets, or implementing mechanisms for correction of bit errors (e.g. use of Hamming codes or the like) at a higher layer of the Internet protocol suite as defined by the RFC 1122, Chapter 1.1.3 (October 1989).

According to the RFC 1122, Chapter 1.1.3, the Internet protocol suite comprises four layers: application layer (which is the top layer of the Internet protocol suite), transport layer (providing end-to-end communication services for applications), Internet layer (carrying data from source host to destination host without guarantee of end-to-end delivery) and link layer (also called media access layer, allows a host to interface with directly connected networks). Ethernet is a link layer protocol.

The above mentioned mechanisms for requesting retransmission of the discarded Ethernet packets and for correcting bit errors are typically implemented at the application layer. For instance, in case Ethernet packets support transmission of real-time traffic by means of the application layer protocol RTP (Real Time Protocol), RTP provides a mechanism for correcting bit errors. On the other hand, in case Ethernet packets support transmission of web page data by means of the application layer protocol HTTP (Hypertext Transfer Protocol), HTTP provides a mechanism for requesting retransmission of discarded Ethernet packets.

However, implementing mechanisms for requesting retransmission of the discarded Ethernet packets or for correcting bit errors at the application layer is disadvantageous because, each time a new application supported by Ethernet is developed, a corresponding mechanisms must be implemented.

This disadvantageously increases times and costs for developing new applications. Moreover, since the various applications are typically developed by different entities, such mechanisms may be very different the ones from the others. This disadvantageously induces a lack of homogeneity in the way the issue of Ethernet discarded packets is managed for the various applications.

Accordingly, the Applicant has faced the problem of providing a method for receiving Ethernet packets transported over a synchronous transport network which overcomes the aforesaid problem.

In particular, the Applicant has faced the problem of providing a method for receiving Ethernet packets transported over a synchronous transport network which reduces the rate of discarded packets at the link layer of the Internet protocol suite (i.e. the layer of Ethernet), so that the mechanism for reducing the rate of discarded packets is common to all the applications supported by the same link layer protocol.

According to a first aspect, the present invention provides a method for receiving Ethernet packets compliant with IEEE Standard 802.3- December 2005 transported over a synchronous transport network, each of the Ethernet packets having a header, a payload and a frame check sequence, the frame check sequence being calculated according to IEEE Standard 802.3-December 2005, wherein receiving comprises processing the frame check sequence of the Ethernet packets for correcting possible single-bit errors affecting the Ethernet packets, characterized in that processing comprises:

   a) storing a plurality of error check frame sequences, each of the plurality of error frame check sequences being associated to a respective position of a single-bit error possibly affecting the Ethernet packets;
   b) calculating a reception frame check sequence on a received Ethernet packet, said calculating being performed according to the IEEE Standard 802.3- December 2005;
   c) if the reception frame check sequence does not match with the frame check sequence, processing the frame check sequence and the reception frame check sequence thus generating a further error frame check sequence;
   d) determining whether one of the plurality of error frame check sequences matches the further error frame check sequence; and
   e) in the affirmative, correcting a bit of the received Ethernet packet located at a position associated to the one of the plurality of error frame check sequences.

Preferably, step c) comprises:

-    if the reception frame check sequence matches with the frame check sequence, determining that the received Ethernet packet does not comprise any bit error.

Profitably, step e) further comprises:

- in the negative, determining that the received Ethernet packet comprises a multi-bit error, and discarding the received Ethernet packet.

Preferably, step d) comprises:

- arranging the plurality of error frame check sequences according to their values; and
- performing a tree search among the plurality of error frame check sequences arranged according to their values.

Profitably, step a) comprises generating, for each of the plurality of error frame check sequences, a respective position information indicative of the position of the single-bit error.

Preferably, the step of generating comprises including in the position information:

- a first field indicating a position of a byte including the bit error within an Ethernet packet; and
- a second field indicating a position of the bit error within the byte.

According to a second aspect, the present invention provides an Ethernet endpoint suitable for being connected to a synchronous transport network for receiving Ethernet packets compliant with IEEE Standard 802.3- December 2005 from the synchronous transport network, each of the Ethernet packets having a header, a payload and a frame check sequence, the frame check sequence being calculated according to IEEE Standard 802.3- December 2005, the Ethernet endpoint being suitable for processing the frame check sequence of the Ethernet packets for correcting possible single-bit errors affecting the Ethernet packets, characterized in that the Ethernet endpoint is suitable for processing by performing the following operations:

a) storing a plurality of error frame check sequences, each of the plurality of error frame check sequences being associated to a respective position of a single-bit error possibly affecting the Ethernet packets;
b) calculating a reception frame check sequence on an Ethernet packet, said calculating being performed according to the IEEE Standard 802.3-December 2005;
c) if the reception frame check sequence does not match with the frame check sequence, processing the frame check sequence and the reception frame check sequence thus generating a further error frame check sequence;
d) determining whether one of the plurality of error frame check sequences matches the further error frame check sequence; and
e) in the affirmative, correcting a bit of the Ethernet packet located at a position associated to the one of the plurality of error frame check sequences.

According to a third aspect, the present invention provides a communication system comprising a synchronous transport network and an Ethernet endpoint, the Ethernet endpoint being connected to the synchronous transport network for receiving Ethernet packets compliant with IEEE Standard 802.3- December 2005 from the synchronous transport network, each of the Ethernet packets having a header, a payload and a frame check sequence, the frame check sequence being calculated according to IEEE Standard 802.3- December 2005, the communication system being characterized in that the Ethernet endpoint is as set forth above.

## Brief description of the drawings

The present invention will be better understood by reading the following detailed description, given by way of example and not of limitation, to be read by referring to the accompanying drawings, wherein:

- Figure 1 schematically shows a communication system suitable for implementing the method according to an embodiment of the present invention;
- Figure 2 schematically shows the structure of an Ethernet packet and a GFP frame encapsulating the Ethernet packet;
- Figure 3 schematically shows the relationship between the frame check sequences of a transmitted Ethernet packet, a received Ethernet packet and an error sequence;
- Figure 4 shows a table allowing to implement the method according to an embodiment of the present invention;
- Figure 5 is a flow chart of the method according to an embodiment of the present invention, during off-line operation; and

- Figure 6 is a flow chart of the method according to an embodiment of the present invention, during in-line operation.

**Detailed description of preferred embodiments of the invention**

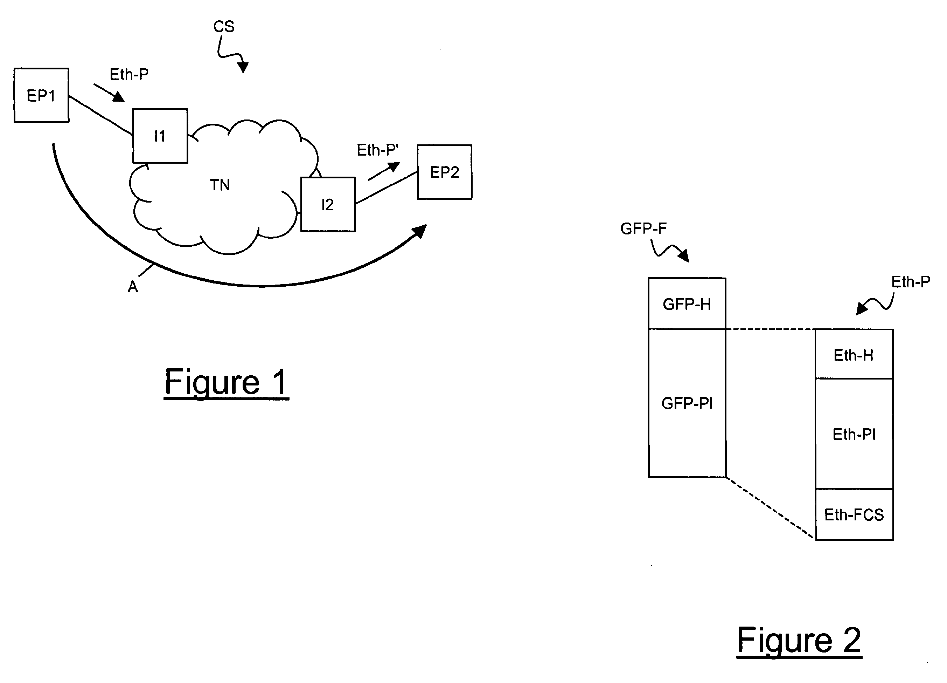

Figure 1 schematically shows a communication system CS suitable for implementing the method according to an embodiment of the present invention.

The communication system CS comprises a synchronous transport network TN, that may comprise an SDH, Sonet or OTN network.

Further, the communication system CS comprises a first Ethernet endpoint EP1 and a second Ethernet endpoint EP2. Both the first Ethernet endpoint EP1 and the second Ethernet endpoint EP2 may be connected to or may be part of respective Ethernet networks, that for simplicity are not shown in Figure 1.

Further, the communication system CS comprises a first interface I1 suitable for connecting the first Ethernet endpoint EP1 and the synchronous transport network TN, and a second interface I2 suitable for connecting the second Ethernet endpoint EP2 and the synchronous transport network TN. For instance, both the first interface I1 and the second interface I2 may be suitable for performing the above mentioned GFP, as it will be described in further detail herein after.

By way of example, the method for transmitting Ethernet packets over the synchronous transport network TN will be described by considering only traffic transmitted from the first Ethernet endpoint EP1 to the second Ethernet endpoint EP2, as indicated by the arrow A shown in Figure 1. This is merely exemplary, since the method is the same also for traffic transmitted from the second Ethernet endpoint EP2 to the first Ethernet endpoint EP1.

When Ethernet packets Eth-P have to be transmitted from the first Ethernet endpoint EP1 to the second Ethernet endpoint EP2, the first Ethernet endpoint EP1 firstly transmits them to the first interface I1. The structure of an Ethernet packet Eth-P transmitted from the first Ethernet endpoint EP1 to the first interface I1 is schematically shown in Figure 2. As mentioned above, the Ethernet packet Eth-P comprises a header Eth-H, a payload Eth-PI and a frame check sequence Eth-FCS.

The frame check sequence Eth-FCS is preferably calculated according to what prescribed by the above mentioned IEEE Standard 803.2, Part 3, 9 December 2005, Chapter 3, i.e.: the frame check sequence Eth-FCS is a 4-byte cyclic redundancy check (CRC) code computed as a function of the header Eth-H (except the preamble and the start of frame delimiter) and of the payload Eth-PI. The computation is performed by using the following generating polynomial:
$G(x) = x^{32}+X^{26}+x^{23}+x^{22}+x^{16}+x^{12}+x^{11}+x^{10}+x^{8}+x^{7}+x^{5}+x^{4}+x^{2}+x+1$

When the first interface I1 receives the Ethernet packets Eth-P, it preferably encapsulates them in respective GFP frames GFP-F. The structure of a GFP frame generated by the first interface I1 is shown in Figure 2. As mentioned above, the GFP frame GFP-F comprises a GFP header GFP-H and a GFP payload GFP-PI. The GFP payload GFP-PI preferably comprises an Ethernet packet Eth-P.

The GFP frame GFP-F is preferably formatted as defined by the above mentioned Recommendation ITU-T G. 7041/Y.1303 (12/2003), Chapter 6. In particular, the GFP header GFP-H (which is termed "core header" in G.7041/Y. 1303) comprises a 2-byte PLI (Payload Length Indicator) field and a 2-byte cHEC (Core Header Error Control) field containing a CRC-16 error control code that protects the integrity of the contents of the core header by enabling both single-bit error correction and multi-bit error detection.

The first interface I1 then maps the GFP frames GFP-F in suitable synchronous tributaries supported by the synchronous transport network TN. For instance, if the synchronous transport network TN is an SDH network, the GPF frames GFP-F may be mapped into SDH VC-n tributaries, such as VC-4 or VC-12 tributaries.

The synchronous tributaries are then transmitted to the second interface I2 through the synchronous transport network TN.

When the second interface I2 receives the synchronous tributaries, it preferably extracts the GFP frames GFP-F, and then performs de-encapsulation, thus deriving received Ethernet packets Eth-P' corresponding to the Ethernet packets Eth-P transmitted by the first Ethernet endpoint EP1 (except possible bit errors due to transmission, as it will be described in detail herein after).

Finally, the second Ethernet endpoint EP2 transmits the received Ethernet packets Eth-P' to the second Ethernet endpoint EP2.

The second Ethernet endpoint EP2 preferably further processes the received Ethernet packets Eth-P'. For instance, if the second Ethernet endpoint EP2 is part of an Ethernet network, the second Ethernet endpoint EP2 preferably reads the destination address included in the header Eth-H' of the received Ethernet packets Eth-P', and forwards the received Ethernet packets Eth-P' towards their destination within the Ethernet network. Otherwise, if the second Ethernet endpoint EP2 is the destination of the Ethernet packets Eth-P, it preferably terminates the received Ethernet packets Eth-P', and forwards them to other devices cooperating with it, that process traffic at higher layers of the Internet protocol suite.

According to embodiments of the present invention, before forwarding or terminating the received Ethernet packets Eth-P', the second Ethernet endpoint EP2 processes the frame check sequence of each received Ethernet packet Eth-P' for correcting possible single-bit errors.

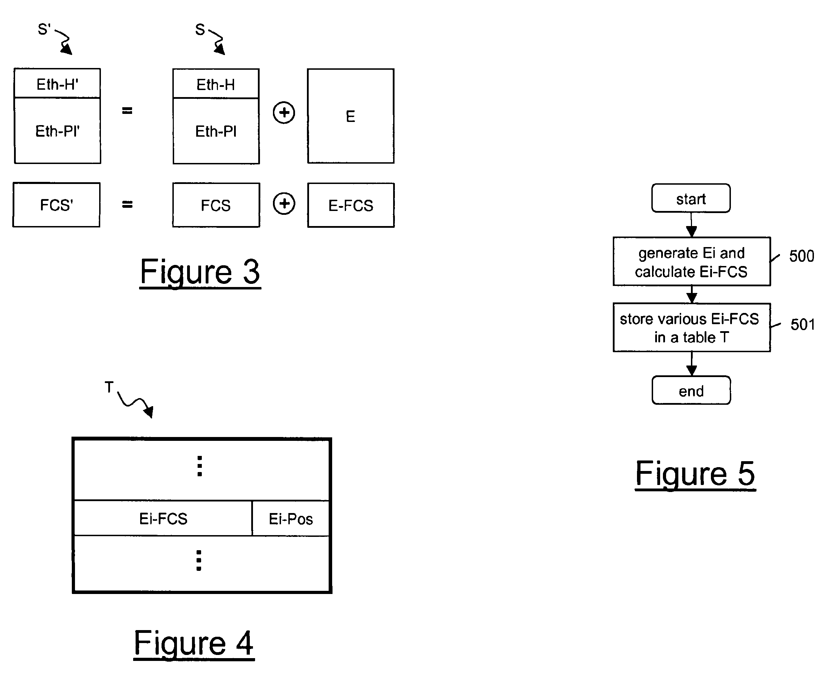

In particular, by referring to Figure 3, the Applicant has noticed that a sequence of bytes S' affected by a bit error (either a single-bit error or a multi-bit error) may be seen as the binary sum of an error-free sequence of bytes S and an error sequence E, i.e. S'=S⊕E, where ⊕ indicates the exclusive OR (XOR) logic operation. Further, the Applicant has noticed that the operation of calculating the frame check sequence of a given sequence of bytes is a linear operation. Accordingly, the frame check sequence FCS' of the sequence of bytes S' affected by bit errors is equal to the binary sum of the frame check sequence FCS of the error-free sequence of bytes S and the frame check sequence E-FCS of the error sequence E, i.e.:

$$FCS'=FCS \oplus E\text{-}FCS.$$

By assuming that:

- the error-free sequence of bytes S corresponds to the header Eth-H and payload Eth-PI of an Ethernet packet Eth-P transmitted by the first Ethernet endpoint EP1;
- the sequence of bytes S' affected by a bit error corresponds to the header Eth-H' and payload Eth-PI' of the received Ethernet packet Eth-P' corresponding to the transmitted Ethernet packet Eth-P; and
- the frame check sequence comprised in the received Ethernet packet Eth-P' is equal to the frame check sequence Eth-FCS comprised in the corresponding Ethernet packet Eth-P (i.e. the frame check sequence is not affected by bit errors),
  the second Ethernet endpoint EP2 may correct possible single-bit errors from the received Ethernet packets Eth-P' by processing their frame check sequences Eth-FCS.

In particular, by referring to Figure 5, during an off-line operation phase, a determination is performed of all possible single-bit errors that may affect the received Ethernet packets Eth-P' and that may be located either in the header Eth-H' or in the payload Eth-PI'. If N is the overall number of bytes of the header Eth-H' and payload Eth-PI', the number of possible single-bit errors is Nx8. Then, for each possible single-bit error, a respective error sequence Ei is generated (step 500). Each error sequence Ei preferably is a sequence of N bytes. Preferably, the error sequence Ei associated to a single-bit error located at the i-th position within the received Ethernet packet Eth-P' has all the bits equal to zero except the bit located at the i-th position.

In the context of the present description, the expression "position of the bit error" indicates the distance between the first bit of the received Ethernet packet Eth-P' and the bit error (i.e. the bit having a value different from the transmitted one). The position of the bit error may therefore range from 0 (i.e. the bit error is located at the first bit of the received Ethernet packet Eth-P') to (Nx8)-1.

During step 500, for each error sequence Ei a respective error frame check sequence Ei-FCS is calculated. Preferably, during step 500, all the error frame check sequences Ei-FCS are calculated by applying to the error sequences Ei the same calculation method applied at the first Ethernet endpoint EP1 for calculating the frame check sequences Eth-FCS of the Ethernet packets Eth-P to be transmitted. In particular, if the frame check sequence Eth-FCS is calculated according to what prescribed by the above mentioned IEEE Standard 803.2, Part 3, 9 December 2005, Chapter 3, also the error frame check sequences Ei-FCS are calculated as 4-byte cyclic redundancy check (CRC) codes by using the following generating polynomial:

$G(x) = x^{32}+X^{26}+x^{23}+x^{22}+x^{16}+x^{12}+x^{11}+x^{10}+x^8+x^7+x^5+x^4+x^2+x+1$

Then, always during the off-line phase, the error frame check sequences Ei-FCS calculated during step 500 are stored in a table T at the second Ethernet endpoint EP2 (step 501), which is then loaded at the second Ethernet endpoint EP2.

The table T is schematically shown in Figure 4. The table T comprises a number of rows equal to the number of possible single-bit errors, i.e. Nx8. For each row, the table T comprises an error frame check sequence Ei-FCS (4 bytes) and an associated position information Ei-Pos indicating that the error frame check sequence Ei-FCS has been calculated on an error sequence Ei indicative of a single-bit error located at the i-th position within the Ethernet packet. Preferably, the position information Ei-Pos comprises a first field indicating the position of the byte comprising the bit error within the received Ethernet packet Eth-P' and a second field indicating the position of the bit error within the byte. For instance, the first field may comprise 11 bits, and is therefore suitable for representing byte positions 0 to $2^{11}$-1=2047. On the other hand, the second field may comprise 3 bits, since only bit positions 0 to 7 must be represented.

Preferably, the error frame check sequences Ei-FCS are arranged within the table T according to a predefined order. Preferably, the error frame check sequences Ei-FCS are arranged according to an increasing order of their values, or according to a decreasing order of their values. This advantageously allows minimizing the maximum time for correcting the single-bit error, has it will be described in detail herein after.

After the table T has been loaded at the second Ethernet endpoint EP2, the off-line phase ends. The second Ethernet endpoint EP2 then enters inline operation, thus starting waiting for reception of Ethernet packets Eth-P' from the second interface I2.

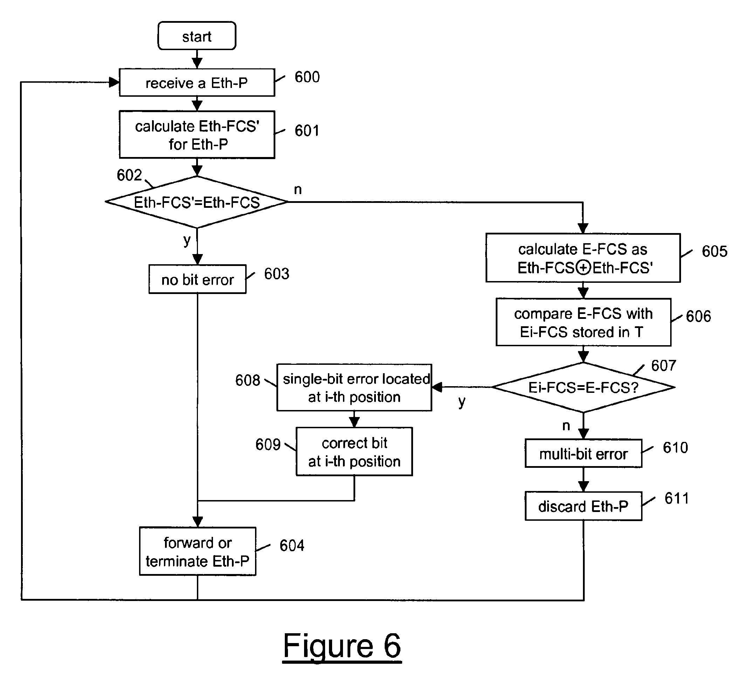

By referring to the flow chart of Figure 6, when the second Ethernet endpoint EP2 receives an Ethernet packet Eth-P' from the second interface I2 (step 600), it preferably calculates a reception frame check sequence Eth-FCS' on the header Eth-H' and payload Eth-Pl' of the received Ethernet packet Eth-P'(step 601). Preferably, the reception frame check sequence Eth-FCS' is calculated by applying the same calculation method applied at the first Ethernet endpoint EP1 for calculating the frame check sequences Eth-FCS of the Ethernet packets Eth-P to be transmitted. In particular, if the frame check sequence Eth-FCS is calculated according to what prescribed by the above mentioned IEEE Standard 802.3, Part 3, 9 December 2005, Chapter 3, also the reception frame check sequences Eth-FCS' are calculated as 4-byte cyclic redundancy check (CRC) codes by using the following generating polynomial:

$$G(x)=x^{32}+x^{26}+x^{23}+x^{22}+x^{16}+x^{12}+x^{11}+x^{10}+x^{8}+x^{7}+x^{5}+x^{4}+x^{2}+x+1.$$

Then, the second Ethernet endpoint EP2 preferably retrieves the frame check sequence Eth-FCS from the received Ethernet packet Eth-P', and compares the retrieved frame check sequence Eth-FCS with the reception frame check sequences Eth-FCS' calculated during step 601 (step 602).

If the retrieved frame check sequence Eth-FCS is equal to the reception frame check sequences Eth-FCS' calculated during step 601, the second Ethernet endpoint EP2 determines that the received Ethernet packet Eth-P' does not contain any bit error (step 603), and therefore processes it either by forwarding it towards its destination, or by terminating it (step 604).

Otherwise, if the retrieved frame check sequence Eth-FCS is different from the reception frame check sequences Eth-FCS' calculated during step 601, the second Ethernet endpoint EP2 preferably calculates an error frame check sequence E-FCS by processing the retrieved frame check sequence Eth-FCS and the calculated reception check frame sequence Eth-FCS' (step 605) according to the following equation:

$$E\text{-FCS}=Eth\text{-FCS}\oplus Eth\text{-FCS'}.$$

Then, the second Ethernet endpoint EP2 preferably compares the error frame check sequence E-FCS calculated during step 601 with the error frame check sequences Ei-FCS stored in the table T (step 606).

If the second Ethernet endpoint EP2 finds in the table T a stored error frame check sequence Ei-FCS matching with the error frame check sequence E-FCS calculated during step 601 (step 607), it determines that the received Ethernet packet Eth-P' comprises a single-bit error at the i-th position (step 608). In particular, it determines the position at which the single-bit error is located by retrieving the position information Ei-Pos associated to the matching error frame check sequence Ei-FCS. The second Ethernet endpoint EP2 then corrects the bit at the i-th position of the received Ethernet packet Eth-P' (step 609) by changing its value from "0" to "1" or *vice versa.* The second Ethernet endpoint EP2 then continues processing the received Ethernet packet Eth-P', either by forwarding it towards its destination, or by terminating it (step 604).

Otherwise, if during step 607 the second Ethernet endpoint EP2 does not find in the table T any error frame check sequence Ei-FCS matching with the error frame check sequence E-FCS calculated during step 601, it determines that the received Ethernet packet Eth-P' contains a multi-bit error (step 610), and therefore discards it (step 611).

The quality of service is therefore advantageously increased, without the need of implementing any retransmission of discarded packets or correction of bit errors at higher layers of the Internet protocol suite.

Indeed, the above method is capable of correcting single-bit errors at the link layer, since the single-bit error correction is based exclusively on the frame check sequence of the Ethernet packets. Implementation at the link layer advantageously allows avoiding development of separated mechanisms for reducing the rate of discarded Ethernet packets at the application layer. This advantageously allows reducing time and costs for developing applications. This also advantageously provides an homogenous solution for reducing the rate of discarded packets, that is shared by all the applications supported by the same link layer.

Besides, advantageously, the solution uses a standard field (i.e. the frame check sequence) which is defined by the IEEE Standard 803.2. Accordingly, this mechanism is compliant with standard Ethernet endpoints. Indeed, the behavior of the first Ethernet endpoint, acting as transmitter, substantially requires no modifications over the IEEE Standard 803.2. As to the behavior of the second Ethernet endpoint, acting as receiver, the table T has to be loaded and a function has to be added, which is capable of performing the steps shown in the flow chart of Figure 6. Therefore, advantageously, the rate of discarded packets is reduced without the need of modifying the IEEE Standard 803.2, but simply implementing some standard-compliant additional functions at the receiver side of Ethernet endpoints.

Preferably, for performing step 606, the second Ethernet endpoint EP2 looks up the table T according to a predefined order. In particular, under the assumption that (as mentioned above), the error check frame sequences Ei-FCS are arranged according to an increasing order of their values, after calculation of the error frame check sequence E-FCS the second Ethernet endpoint EP2 preferably compares the error check frame sequence E-FCS calculated during step 601 with the error frame check sequence Ei-FCS stored at the (Nx8)/2-th row of the table T.

If they match, the second Ethernet endpoint determines that the single-bit error is located at the i-th position indicated by the position information Ei-Pos stored at the (Nx8)/2-th row of the table T.

Otherwise, if the error check frame sequence E-FCS calculated during step 601 is different from (i.e. lower than) the error frame check sequence Ei-FCS stored at the (Nx8)/2-th row of the table T, the second Ethernet endpoint preferably compares it with the error frame check sequence Ei-FCS stored at the (Nx8)/4-th row of the table T. If they match, the second Ethernet endpoint determines that the single-bit error is located at the i-th position indicated by the position information Ei-Pos stored at the (Nx8)/4-th row of the table T. And so on.

On the other hand, if the error check frame sequence E-FCS calculated during step 601 is different from (i.e. higher than) the error frame check sequence Ei-FCS stored at the (Nx8)/2-th row of the table T, the second Ethernet endpoint preferably compares it with the error frame check sequence Ei-FCS stored at the (Nx8)3/4-th row of the table T. If they match, the second Ethernet endpoint determines that the single-bit error is located at the i-th position indicated by the position information Ei-Pos stored at the (Nx8)3/4-th row of the table T. And so on.

The above described procedure is basically a tree search, that advantageously allows minimizing the maximum number of steps required for completing the search of an error frame check sequence Ei-FCS matching the error frame check sequence E-FCS calculated during step 601. The maximum number of steps required for completing the search is indeed log2(Nx8). For instance, if the overall number of bytes of the header Eth-H and payload Eth-PI of an Ethernet packet Eth-P is 1024, the number of possible single-bit errors is 1024x8=8192. Accordingly, the maximum number of steps required for completing the search is log2(8192x8)=14. Since each step is performed at a respective clock cycle, the maximum time required for completing the search is advantageously fixed and predictable.

## Claims

1. A method for receiving Ethernet packets (Eth-P') compliant with IEEE Standard 802.3- December 2005 transported over a synchronous transport network (TN), each of said Ethernet packets (Eth-P') having a header (Eth-H), a payload (Eth-PI) and a frame check sequence (Eth-FCS), said frame check sequence (Eth-FCS) being calculated according to IEEE Standard 802.3- December 2005,
   wherein said receiving comprises processing said frame check sequence (Eth-FCS) of said Ethernet packets (Eth-P') for correcting possible single-bit errors affecting said Ethernet packets (Eth-P'), **characterized in that** said processing comprises:

   a) storing (500, 501) a plurality of error frame check sequences (Ei-FCS), each of said plurality of error frame check sequences (Ei-FCS) being associated to a respective position of a single-bit error possibly affecting said Ethernet packets;
   b) calculating (601) a reception frame check sequence (Eth-FCS') on a header and a payload of a received Ethernet packet (Eth-P'), said calculating being performed according to said IEEE Standard 802.3-December 2005;
   c) if said reception frame check sequence (Eth-FCS') does not match with said frame check sequence (Eth-FCS), processing (605) said frame check sequence (Eth-FCS) and said reception frame check sequence (Eth-FCS') thus generating a further error frame check sequence (E-FCS);
   d) determining (606, 607) whether one of said plurality of error frame check sequences (Ei-FCS) matches said further error frame check sequence (E-FCS); and
   e) in the affirmative, correcting (609) a bit of said received Ethernet packet (Eth-P') located at a position associated to said one of said plurality of error frame check sequences (Ei-FCS).

2. The method according to claim 1, wherein said step c) comprises:

   - if said reception frame check sequence (Eth-FCS') matches with said frame check sequence (Eth-FCS), determining (603) that said received Ethernet packet (Eth-P') does not comprise any bit error.

3. The method according to claim 1, wherein said step e) further comprises:

- in the negative, determining (610) that said received Ethernet packet (Eth-P') comprises a multi-bit error, and discarding (611) said received Ethernet packet (Eth-P').

4. The method according to any of the preceding claims, wherein said step d) comprises:

- arranging said plurality of error frame check sequences (Ei-FCS) according to their values; and
- performing a tree search among said plurality of error frame check sequences (Ei-FCS) arranged according to their values.

5. The method according to any of the preceding claims, wherein said step a) comprises generating, for each of said plurality of error frame check sequences (Ei-FCS), a respective position information (Ei-Pos) indicative of said position of said single-bit error.

6. The method according to claim 5, wherein said generating comprises including in said position information (Ei-Pos):

- a first field indicating a position of a byte including said bit error within an Ethernet packet; and
- a second field indicating a position of said bit error within said byte.

7. An Ethernet endpoint (EP2) suitable for being connected to a synchronous transport network (TN) for receiving Ethernet packets (Eth-P') compliant with IEEE Standard 802.3- December 2005 from said synchronous transport network (TN), each of said Ethernet packets (Eth-P') having a header (Eth-H), a payload (Eth-PI) and a frame check sequence (Eth-FCS), said frame check sequence (Eth-FCS) being calculated according to IEEE Standard 802.3- December 2005,
said Ethernet endpoint (EP2) being suitable for processing said frame check sequence (Eth-FCS) of said Ethernet packets (Eth-P') for correcting possible single-bit errors affecting said Ethernet packets (Eth-P'), **characterized in that** said Ethernet endpoint (EP2) is suitable for processing by performing the following operations:

a) storing (500, 501) a plurality of error frame check sequences (Ei-FCS), each of said plurality of error frame check sequences (Ei-FCS) being associated to a respective position of a single-bit error possibly affecting said Ethernet packets;
b) calculating (601) a reception frame check sequence (Eth-FCS') on header and a payload of an Ethernet packet (Eth-P'), said calculating being performed according to said IEEE Standard 802.3- December 2005;
c) if said reception frame check sequence (Eth-FCS') does not match with said frame check sequence (Eth-FCS), processing (605) said frame check sequence (Eth-FCS) and said reception frame check sequence (Eth-FCS') thus generating a further error frame check sequence (E-FCS);
d) determining (606, 607) whether one of said plurality of error frame check sequences (Ei-FCS) matches said further error frame check sequence (E-FCS); and
e) in the affirmative, correcting (609) a bit of said Ethernet packet (Eth-P') located at a position associated to said one of said plurality of error frame check sequences (Ei-FCS).

8. The Ethernet endpoint (EP2) according to claim 7, wherein it is suitable for performing said operation c) by performing the following operation:

- if said reception frame check sequence (Eth-FCS') matches with said frame check sequence (Eth-FCS), determining (603) that said Ethernet packet (Eth-P') does not comprise any bit error.

9. The Ethernet endpoint (EP2) according to claim 7, wherein it is suitable for performing said operation e) by further performing the following operation:

- in the negative, determining (610) that said Ethernet packet (Eth-P') comprises a multi-bit error, and discarding (611) said Ethernet packet (Eth-P').

10. The Ethernet endpoint (EP2) according to any of claims 7 to 9, wherein it is suitable for performing said operation d) by performing the following operations:

- arranging said plurality of error frame check sequences (Ei-FCS) according to their values; and

- performing a tree search among said plurality of error frame check sequences (Ei-FCS) arranged according to their values.

11. The Ethernet endpoint (EP2) according to any of claims 7 to 10, wherein it is suitable for performing said operation a) by generating, for each of said plurality of error frame check sequences (Ei-FCS), a respective position information (Ei-Pos) indicative of said position of said single-bit error.

12. The Ethernet endpoint (EP2) according to claim 11, wherein it is suitable for performing said generating by including in said position information (Ei-Pos):

- a first field indicating a position of a byte including said bit error within an Ethernet packet; and
- a second field indicating a position of said bit error within said byte.

13. A communication system (CS) comprising a synchronous transport network (TN) and an Ethernet endpoint (EP2), said Ethernet endpoint (EP2) being connected to said synchronous transport network (TN) for receiving Ethernet packets (Eth-P') compliant with IEEE Standard 802.3-December 2005 from said synchronous transport network (TN), each of said Ethernet packets (Eth-P, Eth-P') having a header (Eth-H), a payload (Eth-PI) and a frame check sequence (Eth-FCS), said frame check sequence (Eth-FCS) being calculated according to IEEE Standard 802.3-December 2005, said communication system (CS) being **characterized in that** said Ethernet endpoint (EP2) is according to any of claims 7 to 12.

**Patentansprüche**

1. Verfahren zum Empfangen von über ein synchrones Transportnetzwerk (TN) empfangenen Ethernet-Paketen (Eth-P'), die dem IEEE-Standard 802.3-Dezember 2005, entsprechen, wobei eine jedes der besagten Ethernet-Pakete (Eth-P') einen Header (Eth-H), Nutzdaten (Eth-PI) und eine Rahmenprüfsequenz (Eth-FCS) aufweist, wobei die besagte Rahmenprüfsequenz (Eth-FCS) gemäß dem IEEE-Standard 802.3-Dezember 2005 berechnet werden, wobei das besagte Empfangen das Verarbeiten der besagten Rahmenprüfsequenz (Eth-FCS) der besagten Ethernet-Pakete (Eth-P') zum Korrigieren von möglichen Einzelbitfehlern, welche die besagten Ethernet-Pakete (Eth-P') beeinflussen, umfasst, **dadurch gekennzeichnet, dass** das besagte Verarbeiten umfasst:

a) Speichern (500, 501) einer Mehrzahl von Fehlerrahmenprüfsequenzen (Ei-FCS), wobei eine jede der besagten Mehrzahl von Fehlerrahmenprüfsequenzen (Ei-FCS) mit einer jeweiligen Position eines Einzelbitfehlers, welcher möglicherweise die besagten Ethernet-Pakete beeinflusst, assoziiert ist;
b) Berechnen (601) einer Empfangs-Rahmenprüfsequenz (Eth-FCS') auf einem Header und Nutzdaten eines empfangenen Ethernet-Pakets (Eth-P'), wobei das besagte Berechnen gemäß dem besagten IEEE-Standard 802.3-Dezember 2005 erfolgt;
c) wenn die besagte Empfangs-Rahmenprüfsequenz (Eth-FCS') nicht mit der besagten Rahmenprüfsequenz (Eth-FCS) übereinstimmt, Verarbeiten (605) der besagten Rahmenprüfsequenz (Eth-FCS) und der besagten Empfangs-Rahmenprüfsequenz (Eth-FCS'), wodurch eine weitere Fehlerrahmenprüfsequenz (E-FCS) erzeugt wird;
d) Ermitteln (606, 607), ob eine der besagten Mehrzahl von Fehlerrahmenprüfsequenzen (Ei-FCS) mit der besagten weiteren Fehlerrahmenprüfsequenz (E-FCS) übereinstimmt; und
e) wenn dies der Fall ist, Korrigieren (609) eines Bits des besagten Ethernet-Pakets (Eth-P'), welches sich an einer mit der besagten einen der besagten Mehrzahl von Fehlerrahmenprüfsequenzen (Ei-FCS) assoziierten Position befindet.

2. Verfahren nach Anspruch 1, wobei der besagte Schritt c) umfasst:

- Wenn die besagte Empfangs-Rahmenprüfsequenz (Eth-FCS') mit der besagten Rahmenprüfsequenz (Eth-FCS) übereinstimmt, Bestimmen (603), dass das besagte empfangene Ethernet-Paket (Eth-P') keinen Bitfehler enthält.

3. Verfahren nach Anspruch 1, wobei der besagte Schritt e) weiterhin umfasst:

- Wenn dies nicht der Fall ist, Bestimmen (610), dass das empfangene Ethernet-Paket (Eth-P') einen Mehrbitfehler enthält, und Verwerfen (611) des besagten empfangenen Ethernet-Pakets (Eth-P').

4. Verfahren nach einem beliebigen der vorstehenden Ansprüche, wobei der besagte Schritt d) umfasst;

   - Anordnen der besagten Mehrzahl von Fehlerrahmenprüfsequenzen (Ei-FCS) gemäß ihren Werten; und
   - Durchführen einer Baumsuche unter der besagten Mehrzahl von gemäß ihren Werten angeordneten Fehlerrahmenprüfsequenzen (Ei-FCS).

5. Verfahren nach einem beliebigen der vorstehenden Ansprüche, wobei der besagte Schritt a) das Erzeugen, für eine jede der besagten Mehrzahl von Fehlerrahmenprüfsequenzen (Ei-FCS), einer jeweiligen Positionsinformation (Ei-Pos), welche für die besagte Position des besagten Einzelbitfehlers indikativ ist, umfasst.

6. Verfahren nach Anspruch 5, wobei das besagte Erzeugen das Einfügen, in die besagte Positionsinformation (Ei-Pos),

   - eines ersten Feldes, welches eine Position eines den besagten Bitfehler enthaltenen Bytes innerhalb eines Ethernet-Pakets angibt; und
   - eines zweiten Feldes, welches eine Position des besagten Bitfehlers innerhalb des besagten Bytes angibt,

   umfasst.

7. Ethernet-Endpunkt (EP2), geeignet für den Anschluss an ein synchrones Transportnetzwerk (TN) zum Empfangen von Ethernet-Paketen (Eth-P'), die dem IEEE-Standard 802.3-Dezember 2005 entsprechen, von dem besagten synchronen Transportnetzwerk (TN), wobei ein jedes der besagten Ethernet-Pakete (Eth-P') einen Header (Eth-H), Nutzdaten (Eth-Pi) und eine Rahmenprüfsequenz (Eth-FCS) aufweist, wobei die besagte Rahmenprüfsequenz (Eth-FCS) gemäß dem IEEE-Standard 802.3-Dezember 2005 berechnet wird,
   wobei der besagte Ethernet-Endpunkt (EP2) für das Verarbeiten der besagten Rahmenprüfsequenz (Eth-FCS) der besagten Ethernet-Pakete (Eth-P') zum Korrigieren von möglichen Einzelbitfehlern, welche die besagten Ethernet-Pakete (Eth-P') beeinflussen, geeignet ist, **dadurch gekennzeichnet, dass** der besagte Ethernet-Endpunkt (EP2) für das Verarbeiten geeignet ist, indem er die folgenden Vorgänge durchführt:

   a) Speichern (500, 501) einer Mehrzahl von Fehlerrahmenprüfsequenzen (Ei-FCS), wobei eine jede der besagten Mehrzahl von Fehlerrahmenprüfsequenzen (Ei-FCS) mit einer jeweiligen Position eines Einzelbitfehlers, welcher möglicherweise die besagten Ethernet-Pakete beeinflusst, assoziiert ist;
   b) Berechnen (601) einer Empfangs-Rahmenprüfsequenz (Eth-FCS') auf einem Header und Nutzdaten eines empfangenen Ethernet-Pakets (Eth-P'), wobei das besagte Berechnen gemäß dem besagten IEEE-Standard 802.3-Dezember 2005 erfolgt;
   c) wenn die besagte Empfangs-Rahmenprüfsequenz (Eth-FCS') nicht mit der besagten Rahmenprüfsequenz (Eth-FCS) übereinstimmt, Verarbeiten (605) der besagten Rahmenprüfsequenz (Eth-FCS) und der besagten Empfangs-Rahmenprüfsequenz (Eth-FCS'), wodurch eine weitere Fehlerrahmenprüfsequenz (E-FCS) erzeugt wird;
   d) Ermitteln (606, 607), ob eine der besagten Mehrzahl von Fehlerrahmenprüfsequenzen (Ei-FCS) mit der besagten weiteren Fehlerrahmenprüfsequenz (E-FCS) übereinstimmt; und
   e) wenn dies der Fall ist, Korrigieren (609) eines Bits des besagten Ethernet-Pakets (Eth-P'), welches sich an einer mit der besagten einen der besagten Mehrzahl von Fehlerrahmenprüfsequenzen (Ei-FCS) assoziierten Position befindet.

8. Ethernet-Endpunkt (EP2) nach Anspruch 7, geeignet für das Durchführen des besagten Vorgangs c), indem er den folgenden Vorgang durchführt:

   - Wenn die besagte Empfangs-Rahmenprüfsequenz (Eth-FCS') mit der besagten Rahmenprüfsequenz (Eth-FCS) übereinstimmt, Bestimmen (603), dass das besagte Ethernet-Paket (Eth-P') keinen Bitfehler enthält.

9. Ethernet-Endpunkt (EP2) nach Anspruch 7, geeignet für das Durchführen des besagten Vorgangs e), indem er den folgenden Vorgang durchführt:

   - Wenn dies nicht der Fall ist, Bestimmen (610), dass das besagte Ethernet-Paket (Eth-P') einen Mehrbitfehler enthält, und Verwerfen (611) des besagten Ethernet-Pakets (Eth-P').

10. Ethernet-Endpunkt (EP2) nach einem beliebigen der Ansprüche 7 bis 9, geeignet für das Durchführen des besagten Vorgangs d), indem er die folgenden Vorgänge durchführt:

- Anordnen der besagten Mehrzahl von Fehlerrahmenprüfsequenzen (Ei-FCS) gemäß ihren Werten; und
- Durchführen einer Baumsuche unter der besagten Mehrzahl von gemäß ihren Werten angeordneten Fehlerrahmenprüfsequenzen (Ei-FCS).

11. Ethernet-Endpunkt (EP2) nach einem beliebigen der Ansprüche 7 bis 10, geeignet für das Durchführen des besagten Vorgangs a), indem er für eine jede der besagten Mehrzahl von Fehlerrahmenprüfsequenzen (Ei-FCS) eine jeweilige Positionsinformation (Ei-Pos) erzeugt, welche für die besagte Position des besagten Einzelbitfehlers indikativ ist.

12. Ethernet-Endpunkt (EP2) nach Anspruch 11, geeignet für das Durchführen des besagten Erzeugens, indem er in die besagte Positionsinformation (Ei-Pos) einfügt:

- Ein erstes Feld, welches eine Position eines Bytes, welches das besagte Fehlerbit enthält, innerhalb eines Ethernet-Pakets angibt; und
- ein zweites Feld, welches eine Position des besagten Bitfehlers innerhalb des besagten Bytes angibt.

13. Kommunikationssystem (CS) mit einem synchronen Transportnetzwerk (TN) und einem Ethernet-Endpunkt (EP2), wobei der besagte Ethernet-Endpunkt (EP2) an das besagte synchrone Transportnetzwerk (TN) angeschlossen ist, um Ethernet-Pakete (Eth-P'), die dem IEEE-Standard 802.3-Dezember 2005 entsprechen, von dem besagten synchronen Transportnetzwerk (TN) zu empfangen, wobei ein jedes der besagten Ethernet-Pakete (Eth-P, Eth-P') einen Header (Eth-H), Nutzdaten (Eth-P1) und eine Rahmenprüfsequenz (Eth-FCS) aufweist, wobei die besagte Rahmenprüfsequenz (Eth-FCS) gemäß IEEE-Standard 802.3-Dezember 2005 berechnet wird, wobei das Kommunikationssystem (CS) **dadurch gekennzeichnet ist, dass** der besagte Ethernet-Endpunkt (EP2) einem beliebigen der Ansprüche 7 bis 12 entspricht.

**Revendications**

1. Procédé de réception de paquets Ethernet (Eth-P') conformes à la norme IEEE 802.3- Décembre 2005 transportés dans un réseau de transport synchrone (TN), chacun desdits paquets Ethernet (Eth-P') présentant un en-tête (Eth-H), une charge utile (Eth-PI) et une séquence de contrôle de trame (Eth-FCS), ladite séquence de contrôle de trame (Eth-FCS) étant calculée conformément à la norme IEEE 802.3-Décembre 2005,
dans lequel ladite réception comprend le traitement de ladite séquence de contrôle de trame (Eth-FCS) desdits paquets Ethernet (Eth-P') pour corriger d'éventuelles erreurs portant sur un seul bit affectant lesdits paquets Ethernet (Eth-P'), **caractérisé en ce que** ledit traitement comprend les étapes suivantes :

a) stocker (500, 501) une pluralité de séquences de contrôle de trame d'erreur (Ei-FCS), chaque séquence parmi ladite pluralité de séquences de contrôle de trame d'erreur (Ei-FCS) étant associée à une position respective d'une erreur portant sur un seul bit pouvant affecter lesdits paquets Ethernet :
b) calculer (601) une séquence de contrôle de trame de réception (Eth-FCS') sur un en-tête et une charge utile d'un paquet Ethernet reçu (Eth-P'), ledit calcul étant réalisé conformément à ladite norme IEEE 802.3- Décembre 2005 ;
c) si ladite séquence de contrôle de trame de réception (Eth-FCS') ne correspond pas à ladite séquence de contrôle de trame (Eth-FCS), traiter (605) ladite séquence de contrôle de trame (Eth-FCS) et ladite séquence de contrôle de trame de réception (Eth-FCS') générant ainsi une autre séquence de contrôle de trame d'erreur (E-FCS) ;
d) déterminer (606, 607) si une séquence parmi ladite pluralité de séquences de contrôle de trame d'erreur (Ei-FCS) correspond à ladite autre séquence de contrôle de trame d'erreur (E-FCS) ; et
e) si tel est le cas, corriger (609) un bit dudit paquet Ethernet reçu (Eth-P') situé à une position associée à ladite séquence parmi ladite pluralité de séquences de contrôle de trame d'erreur (Ei-FCS).

2. Procédé selon la revendication 1, dans lequel ladite étape c) comprend l'étape suivante :

- si ladite séquence de contrôle de trame de réception (Eth-FCS') correspond à ladite séquence de contrôle de trame (Eth-FCS), déterminer (603) que ledit paquet Ethernet reçu (Eth-P') ne comprend aucune erreur binaire.

3. Procédé selon la revendication 1, dans lequel ladite étape e) comprend en outre l'étape suivante :

- si tel n'est pas le cas, déterminer (610) que ledit paquet Ethernet reçu (Eth-P') comprend une erreur portant

EP 2 207 287 B1

sur plusieurs bits, et éliminer (611) ledit paquet Ethernet reçu (Eth-P').

4. Procédé selon l'une quelconque des revendications précédentes, dans lequel ladite étape d) comprend les étapes suivantes :

- agencer ladite pluralité de séquences de contrôle de trame d'erreur (Ei-FCS) en fonction de leurs valeurs ; et
- effectuer une recherche arborescente parmi ladite pluralité de séquences de contrôle de trame d'erreur (Ei-FCS) agencées en fonction de leurs valeurs.

5. Procédé selon l'une quelconque des revendications précédentes, dans lequel ladite étape a) comprend la génération, pour chaque séquence parmi ladite pluralité de séquences de contrôle de trame d'erreur (Ei-FCS), d'une information de position (Ei-Pos) respective indiquant ladite position de ladite erreur portant sur un seul bit.

6. Procédé selon la revendication 5, dans lequel ladite génération comprend l'inclusion dans ladite information de position (Ei-Pos):

- d'un premier champ indiquant une position d'un octet comprenant ladite erreur binaire à l'intérieur d'un paquet Ethernet ; et
- d'un deuxième champ indiquant une position de ladite erreur binaire à l'intérieur dudit octet.

7. Point de terminaison Ethernet (EP2) pouvant être connecté à un réseau de transport synchrone (TN) pour recevoir des paquets Ethernet (Eth-P') conformes à la norme IEEE 802.3- Décembre 2005 à partir dudit réseau de transport synchrone (TN), chacun desdits paquets Ethernet (Eth-P') présentant un en-tête (Eth-H), une charge utile (Eth-PI) et une séquence de contrôle de trame (Eth-FCS), ladite séquence de contrôle de trame (Eth-FCS) étant calculée conformément à la norme IEEE 802.3-Décembre 2005,
ledit point de terminaison Ethernet (EP2) pouvant traiter ladite séquence de contrôle de trame (Eth-FCS) desdits paquets Ethernet (Eth-P') pour corriger d'éventuelles erreurs portant sur un seul bit affectant lesdits paquets Ethernet (Eth-P'), ledit point de terminaison Ethernet (EP2) pouvant réaliser un traitement en effectuant les opérations suivantes :

a) stocker (500, 501) une pluralité de séquences de contrôle de trame d'erreur (Ei-FCS), chaque séquence parmi ladite pluralité de séquences de contrôle de trame d'erreur (Ei-FCS) étant associée à une position respective d'une erreur portant sur un seul bit pouvant affecter lesdits paquets Ethernet ;
b) calculer (601) une séquence de contrôle de trame de réception (Eth-FCS') sur un en-tête et une charge utile d'un paquet Ethernet (Eth-P'), ledit calcul étant réalisé conformément à ladite norme IEEE 802.3- Décembre 2005 ;
c) si ladite séquence de contrôle de trame de réception (Eth-FCS') ne correspond pas à ladite séquence de contrôle de trame (Eth-FCS), traiter (605) ladite séquence de contrôle de trame (Eth-FCS) et ladite séquence de contrôle de trame de réception (Eth-FCS'), générant ainsi une autre séquence de contrôle de trame d'erreur (E-FCS) ;
d) déterminer (606, 607) si une séquence parmi ladite pluralité de séquences de contrôle de trame d'erreur (Ei-FCS) correspond à ladite autre séquence de contrôle de trame d'erreur (E-FCS) ; et
e) si tel est le cas, corriger (609) un bit dudit paquet Ethernet (Eth-P') situé à une position associée à ladite séquence parmi ladite pluralité de séquences de contrôle de trame d'erreur (Ei-FCS).

8. Point de terminaison Ethernet (EP2) selon la revendication 7, pouvant réaliser ladite opération c) en effectuant l'opération suivante :

- si ladite séquence de contrôle de trame de réception (Eth-FCS') correspond à ladite séquence de contrôle de trame (Eth-FCS), déterminer (603) que ledit paquet Ethernet (Eth-P') ne comprend aucune erreur binaire.

9. Point de terminaison Ethernet (EP2) selon la revendication 7, pouvant réaliser ladite opération e) en effectuant en outre l'opération suivante :

- si tel n'est pas le cas, déterminer (610) que ledit paquet Ethernet (Eth-P') comprend une erreur portant sur plusieurs bits, et éliminer (611) ledit paquet Ethernet (Eth-P').

10. Point de terminaison Ethernet (EP2) selon l'une quelconque des revendications 7 à 9, pouvant réaliser ladite opération d) en effectuant les opérations suivantes :

- agencer ladite pluralité de séquences de contrôle de trame d'erreur (Ei-FCS) en fonction de leurs valeurs ; et
- effectuer une recherche arborescente parmi ladite pluralité de séquences de contrôle de trame d'erreur (Ei-FCS) agencées en fonction de leurs valeurs.

11. Point de terminaison Ethernet (EP2) selon l'une quelconque des revendications 7 à 10, pouvant réaliser ladite opération a) en générant, pour chaque séquence parmi ladite pluralité de séquences de contrôle de trame d'erreur (Ei-FCS), une information de position (Ei-Pos) respective indiquant ladite position de ladite erreur portant sur un seul bit.

12. Point de terminaison Ethernet (EP2) selon la revendication 11, pouvant réaliser ladite génération en incluant dans ladite information de position (Ei-Pos) :

- un premier champ indiquant une position d'un octet comprenant ladite erreur binaire à l'intérieur d'un paquet Ethernet ; et
- un deuxième champ indiquant une position de ladite erreur binaire à l'intérieur dudit octet.

13. Système de communication (CS) comprenant un réseau de transport synchrone (TN) et un point de terminaison Ethernet (EP2), ledit point de terminaison Ethernet (EP2) étant connecté audit réseau de transport synchrone (TN) pour recevoir des paquets Ethernet (Eth-P') conformes à la norme IEEE 802.3 Décembre 2005 à partir dudit réseau de transport synchrone (TN), chacun desdits paquets Ethernet (Eth-P, Eth-P') présentant un en-tête (Eth-H), une charge utile (Eth-PI) et une séquence de contrôle de trame (Eth-FCS), ladite séquence de contrôle de trame (Eth-FCS) étant calculée conformément à la norme IEEE 802.3 Décembre 2005, ledit système de communication (CS) étant **caractérisé en ce que** ledit point de terminaison Ethernet (EP2) est conforme à l'une quelconque des revendications 7 à 12.

Figure 1

Figure 2

EP 2 207 287 B1

S'                          S

| Eth-H' |
|--------|
| Eth-Pl' |

=

| Eth-H |
|-------|
| Eth-Pl |

⊕

| E |

| FCS' | = | FCS | ⊕ | E-FCS |

## Figure 3

T

| ⋮ |
|---|
| Ei-FCS | Ei-Pos |
| ⋮ |

## Figure 4

start

| generate Ei and calculate Ei-FCS | — 500 |

| store various Ei-FCS in a table T | — 501 |

end

## Figure 5

EP 2 207 287 B1

```
                    ┌─────────┐
                    │  start  │
                    └────┬────┘
                         ▼
              ┌──────────────────┐
    ┌────────▶│  receive a Eth-P │──── 600
    │         └────────┬─────────┘
    │                  ▼
    │         ┌──────────────────┐
    │         │ calculate Eth-FCS'│──── 601
    │         │   for Eth-P      │
    │         └────────┬─────────┘
    │    602           ▼
    │         ◇────────────────◇        n
    │         ◇ Eth-FCS'=Eth-FCS ◇──────────────────────────┐
    │         ◇────────────────◇                            │
    │                  │ y                                   ▼
    │                  ▼                        ┌─────────────────────┐
    │         ┌──────────────┐                  │  calculate E-FCS as │──── 605
    │         │ no bit error │──── 603          │  Eth-FCS⊕Eth-FCS'   │
    │         └──────┬───────┘                  └──────────┬──────────┘
    │                │                                      ▼
    │                │                        ┌─────────────────────┐
    │                │                        │ compare E-FCS with  │──── 606
    │                │                        │  Ei-FCS stored in T │
    │                │                        └──────────┬──────────┘
    │                │                           607      ▼
    │                │    ┌─────────────────┐   ◇──────────────────◇
    │                │608 │ single-bit error│◀──◇  Ei-FCS=E-FCS?   ◇
    │                │    │ located at i-th  │ y ◇──────────────────◇
    │                │    │   position      │            │ n
    │                │    └────────┬────────┘            ▼
    │                │             ▼              ┌──────────────┐
    │                │    ┌─────────────────┐     │ multi-bit error│──── 610
    │                │609 │  correct bit    │     └──────┬───────┘
    │                │    │ at i-th position│            ▼
    │                │    └────────┬────────┘     ┌──────────────┐
    │                │             │              │ discard Eth-P│──── 611
    │                ▼◀────────────┘              └──────┬───────┘
    │         ┌──────────────┐                          │
    │         │  forward or  │──── 604                  │
    │         │ terminate Eth-P│                        │
    │         └──────┬───────┘                          │
    │                │                                   │
    └────────────────┴───────────────────────────────────┘
```

## Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070127487 A1

- EP 1628402 A1

**Non-patent literature cited in the description**

- IEEE Standard 803.2, Part 3. 09 December 2005
- RFC 1122. October 1989

- IEEE Standard 802.3, Part 3. 09 December 2005